# EUROPEAN PATENT SPECIFICATION

(11) **EP 1 138 588 B1**
(45) Date of publication and mention of the grant of the patent: **07.06.2006**
(21) Application number: 01107596.7
(22) Date of filing: 27.03.2001
(51) Int. Cl.: B62K 11/04, B62K 19/06

(54) **A motorcycle frame**
Motorradrahmen
Cadre de motocyclette

(30) Priority: 31.03.2000 JP 2000096804
(43) Date of publication of application: 04.10.2001
(73) Proprietor: HONDA GIKEN KOGYO KABUSHIKI KAISHA, Minato-ku, Tokyo (JP)
(72) Inventor: Adachi, Eiji, 4-1, Chuo 1-chome, Wako-shi, Saitama (JP); Okuma, Takanori, 4-1, Chuo 1-chome, Wako-shi, Saitama (JP)
(74) Representative: Quinterno, Giuseppe

(56) References cited:
- EP-A- 0 447 899
- EP-A- 0 765 800
- EP-A- 0 826 584
- FR-A- 2 783 228
- GB-A- 498 696
- US-A- 4 809 999
- PATENT ABSTRACTS OF JAPAN vol. 0081, no. 54 (M-310), 18 July 1984 (1984-07-18) & JP 59 050938 A (TERUAKI YOSHIDA), 24 March 1984 (1984-03-24)
- PATENT ABSTRACTS OF JAPAN vol. 1998, no. 04, 31 March 1998 (1998-03-31) & JP 9 309479 A (HONDA MOTOR CO LTD), 2 December 1997 (1997-12-02)
- PATENT ABSTRACTS OF JAPAN vol. 0135, no. 52 (M-903), 8 December 1989 (1989-12-08) & JP 1 226484 A (SUZUKI MOTOR CO LTD), 11 September 1989 (1989-09-11)
- PATENT ABSTRACTS OF JAPAN vol. 2000, no. 17, 5 June 2001 (2001-06-05) & JP 1 004584 A (YAMAHA MOTOR CO LTD), 9 January 1989 (1989-01-09)

## Description

This invention relates to a motorcycle frame of the kind defined in the preamble of claim 1. EP-A-0 447 899 discloses a motorcycle frame of this kind comprising a down frame strengthened by means of a plurality of internal plates.

An object of the present application is to provide a motorcycle frame that is formed having a cross sectional shape conforming to required stress distribution to reduce weight, and which can be made easily.

In order to achieve this object the invention proposes a motorcycle frame as defined in claim 1.

The down frame of the present invention has a rib formed on an inner surface of a front side section, which means that the front side of the down frame having maximum stress sections can be made especially rigid, while other sections can be made comparatively thin, with the result that it can be formed having a cross sectional shape conforming to actual stress distribution, contributing to reduction in the overall weight of the vehicle frame.

Also, the pipe having this type of angular cross section has a rib integrally formed on an inner surface and a previously extruded angular cross section pipe can be easily obtained using a swaging process, and at this time it is also possible to form an asymmetrical shape having only a rear side surface section tapered.

Embodiments of the invention will be described in the following, based on the drawings.
Fig. 1 is a side elevation of essential parts of an off-road motorcycle,
Fig. 2 is a drawing showing partial component arrangement above an engine from the side of the vehicle side surface side,
Fig. 3 is a drawing showing partial component layout of the same components from above the vehicle,
Fig. 4 is a drawing showing partial component layout above a pivot plate, from the side of the vehicle,
Fig. 5 is a drawing showing partial component arrangement from the rear of the vehicle frame,
Fig. 6 is a drawing showing partial component layout from the front of the vehicle,
Fig. 7 is a side elevation of essential parts of a vehicle frame,
Fig. 8 is a plan view of a front half side of the vehicle frame,
Fig. 9 is a rear perspective view of the vehicle frame, and
Fig. 10 is a cross sectional view along line 10 - 10 in Fig. 7.

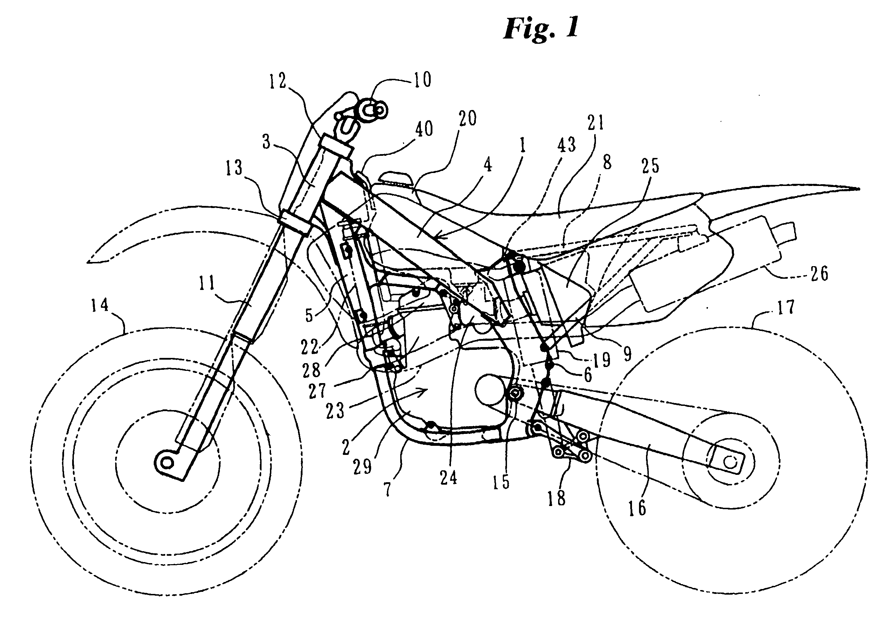

First of all, in Fig. 1, a motorcycle frame 1 has a cradle shape and supports a water cooled 4-cycle engine 2, and comprises a pair of left and right mainframes 4 extending from a headpipe 3 over the engine 2 to the rear of the vehicle, a down tube or frame 5 extending diagonally downwards from the head pipe 3 along a vehicle center line in front of the engine 2, a pair of left and right pivot plates 6 connecting to rear ends of respective left and right main frames 4 and arranged in a vertical direction to the rear of the engine 2, and a pair of left and right lower frames 7 passing underneath the engine 2 for connecting the down tube 5 and the lower ends of each of the pivot plates 6. Also, a pair of left and right seat rails 8 extend rearwards from upper end sections of the pivot plates 6, and rear end sections of the seat rails 8 and interstitial sections of the pivot plates are connected by a sloping rear caliper 9.

A pair of left and right front forks 11 steered by the handle 10 are rotatably supported on the headpipe 3 via a top bridge 12 and a bottom bridge 13. Reference numeral 14 is a front wheel.

Front ends of rear swing arms 16 are swingably supported between interstitial sections of the left and right pivot plates 6 using a pivot shaft 15, and a rear wheel is supported on rear ends of the rear swingarms 16. Also, a rear cushion 19 is attached between a link 18 provided on a front section of the rear swing arms and a rear cross member, that will be described later, provided on an upper end of the pivot plates, constituting a rear wheel suspension.

In the drawing, reference numeral 20 is a fuel tank supported between left and right main frames 4, 21 is a seat supported on the left and right seat rails 8, 22 is a radiator, 23 is an exhaust pipe, 24 is a carburetor, 25 is an air cleaner and 26 is a muffler.

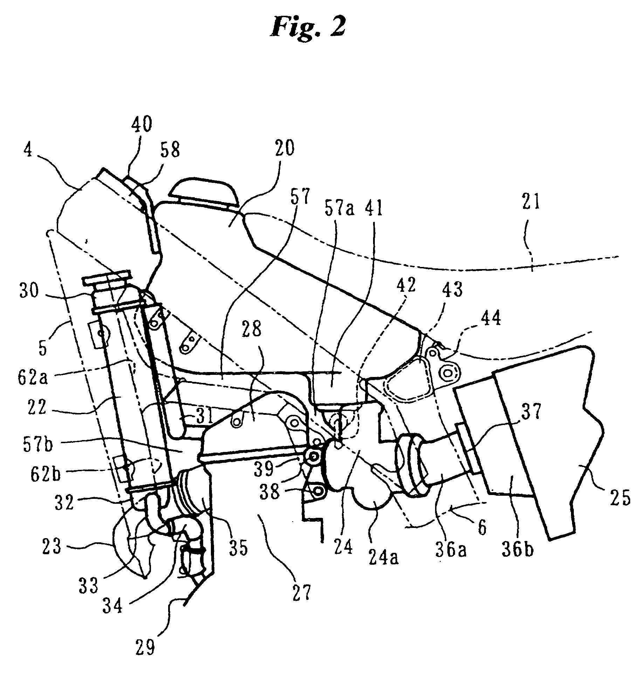

As shown in Fig. 2, the engine 2 is a water cooled 4-cycle engine, with a cylinder head 27 provided substantially upright, and a cylinder head cover 28 substantially forming a triangle viewed from the side, with a rear side of the cylinder head cover 28 fitted into an inner side of the main frames 4. An exhaust passageway 35 is provided in a central front section of the cylinder head 27, and an exhaust pipe 23 is connected to the exhaust passageway.

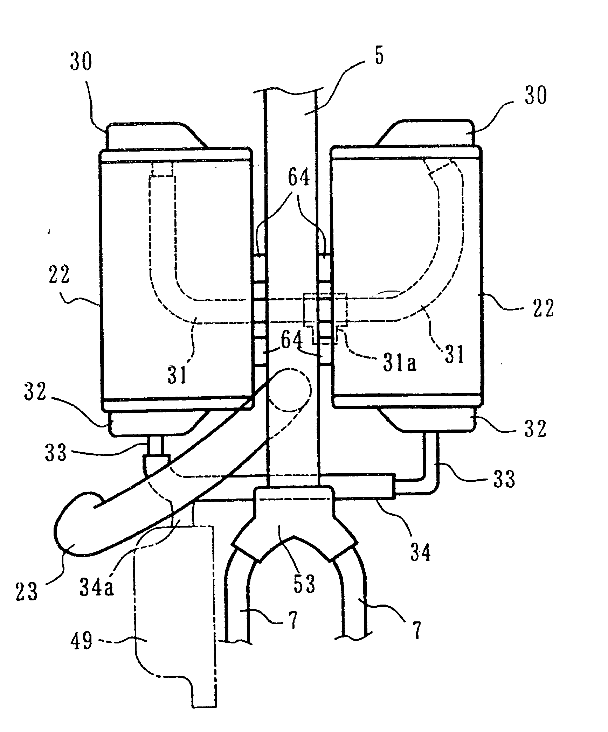

The radiator 22 is supported on both of the pair of left and right down tubes 5 (refer to Fig 5), and a return water side water hose 31 is piped between an upper tank 30 of the radiator and a cylinder head tank 28. A sending water side hose 33 extends from a lower tank 32, and connects to a crankcase 29 side.

A carburetor 24 is connected to an intake port provided on a rear surface side of the cylinder head 27, and an intake upstream side of the carburetor 24 is connected to an air cleaner 25 via a connecting tube 36. The connecting tube 36 is arranged so that a section in the vicinity of a joining part of a rear end of the main frame 4, at an upper part of the pivot plate 6 of the main frame 4, is traversed when viewed from the side.

The air cleaner 25 has a front section 37 removably provided on a front surface to connect with a rear end of the connecting tube 36, and in this way the maintainability of the air cleaner having the connecting tube 36 arranged like this is improved.

A fuel tank 20 is supported by being attached, using bolts or the like, to a boss 58 for positioning a front end section on an upper part of the main frame using a bracket 40, and a rear end section is supported on a rear cross member, to be described later, provided between upper end sections of the left and right pivot plates 6. A sump-like section 41 projecting downwards is provided in a rear lower part of the fuel tank 20, and a fuel cock 42 is provided in a lower part of the sump-like section.

The sump-like section 41 is arranged projecting to the rear of the cylinder head 27 and cylinder head cover 28 projecting above the 4-cycle engine 2, and into the inside of a sump-like space 57a formed in front of the rear cross member 43, and has a height that overlaps the cylinder head cover 28 in the longitudinal direction of the vehicle, and is positioned overlapping an upper part of the carburetor 24 when viewed from the side.

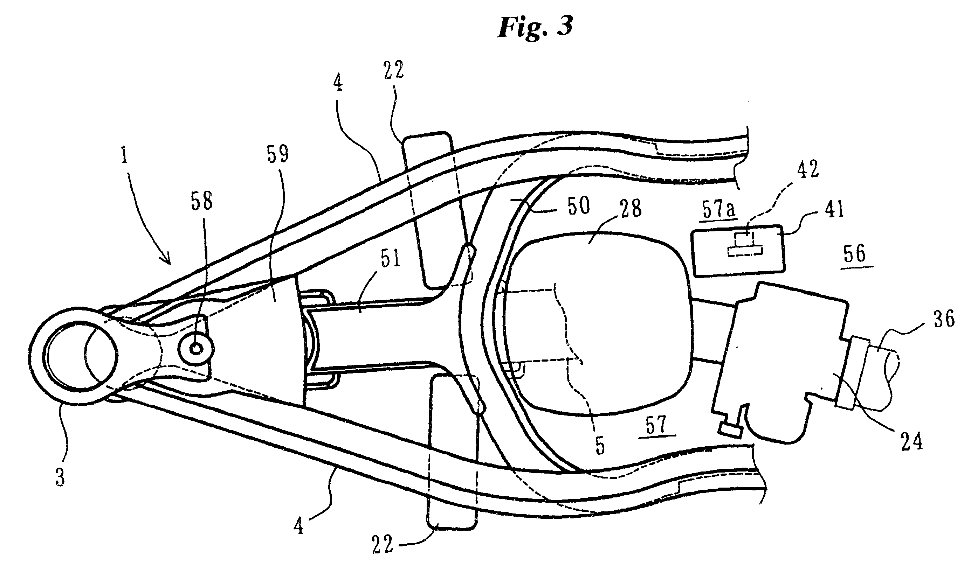

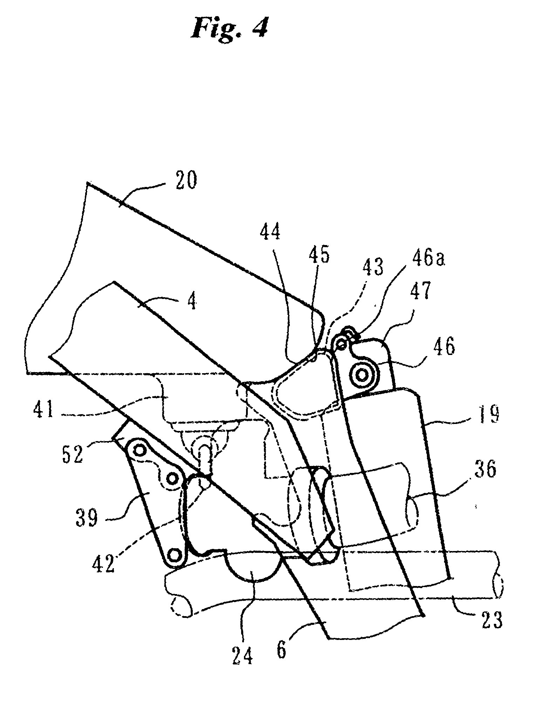

As is clear from Fig. 4, the position of the fuel cock 42 provided below the sump-like section 41 is such that a lower end protrudes slightly lower than a lower edge of the main frame 4 when viewed from the side, and the sump-like section 41 is positioned overlapping the main frame 4. Also, as is clear from Fig. 3, the sump-like section 41 links to the carburetor 24 in a widthwise direction of the vehicle.

As shown in Fig. 1, with respect to support of the engine 2, an upper section is supported by the mainframe 4, a front side is supported by a down tube lower section, the lower side is supported by a central section of the lower frame 7, and a rear section has a crankcase 29 supported by the pivot plates 6 using a pivot shaft 15. Among these sections, the upper section is supported on a lower surface of the main frame 4, via a hanger bracket 39, by a support section 38 provided on a rear section of the cylinder head 27, as shown in Fig. 2 and Fig. 4.

Next, component layout in the vicinity of the down tube 5 will be described. Fig. 5 shows the down tube 5 and components around the down tube 5, for the layout of the radiators 22, from the front of the vehicle. The radiators 22 are provided on the left and right, with respective upper tanks 30 being connected by a return water hose 31, and connected to a water jacket outlet on the cylinder head cover 28 side by a joint pipe 31a.

Also, sending water hoses 33 from each of lower tanks 32 extend to the center of the vehicle, are connected to a joint hose 34 traversing in a lateral direction across the rear of a tapered section 62b of the down tube 5, and are also connected to a water pump 49 provided on the right side of the crankcase by a joint section 34a provided on the right side of the joint hose 34. An exhaust pipe 23 also passes behind the tapered section 62b, slopes downwards jutting out to the right side of the vehicle, passes below the right side radiator 22 and extends to the rear.

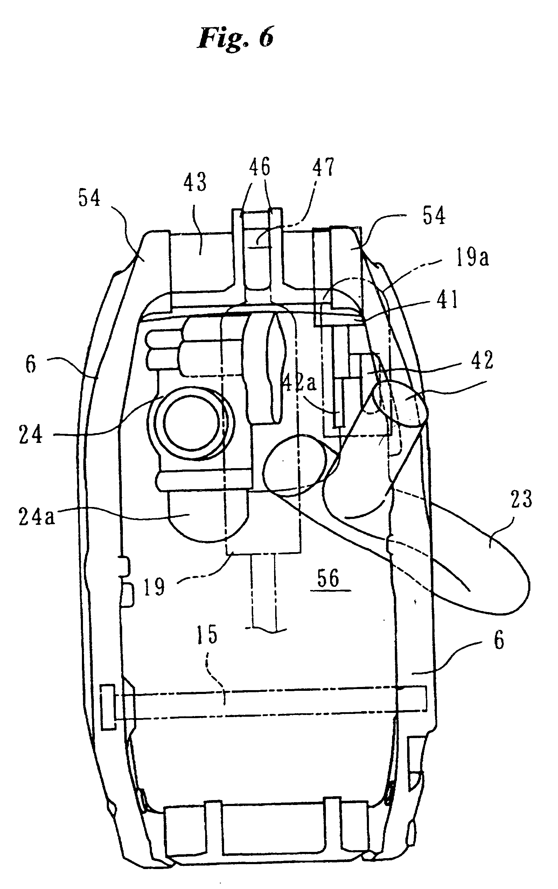

Next, component layout in a space 56 formed below the rear cross member 43 will be described. Fig. 6 shows these components from the rear of the vehicle. Inside this space a carburetor 24 is arranged at a position below the vicinity of the rear cross member 43 and approaching the left side of the vehicle, a sump-like section 41 and a fuel cock 42 provided underneath the bottom of the sump-like section 41 are positioned on the right side of the carburetor 24, and a fuel tube 42a extending downwards from the fuel cock 42 is connected to a float chamber 24a of the carburetor 24. The height of the fuel cock 42 is slightly higher than the float chamber 24a.

Also, a rear cushion 19 is positioned to the rear of these components, and in the vicinity of the center of the vehicle, and the fuel cock 42 is positioned so as to overlap to the front of a reserve tank 19a aligned with the rear cushion 19. An exhaust pipe is also arranged passing below each of the fuel cock 42 and the reserve tank 19a. A front part of the exhaust pipe 23 juts out at a sloping right side from the front of the cylinder head 27 and then curves again towards the inside of the vehicle (refer to Fig. 5), passes an inner side of the pivot plate 6 on a rear right side and underneath each of the fuel cock 42 and the reserve tank 19a, as described above, and extends to the rear while curving slightly to the rear, and to the right of the vehicle and upwards. The exhaust pipe 23 and a connecting tube (not shown in this drawing) connected to the carburetor 24 are arranged respectively dividing to the left and right sides of the rear cushion 19.

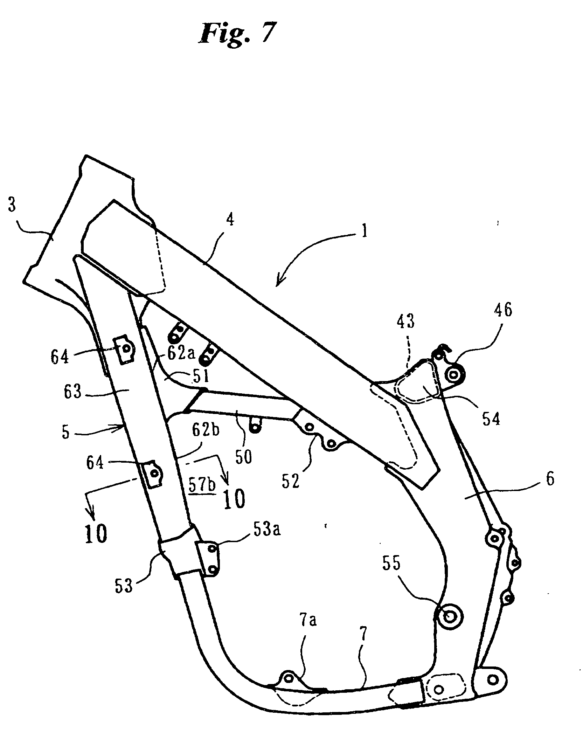

Next, the structure of the vehicle frame 1 will be described in detail using Fig. 7 to Fig. 10. The main frame 4 has a member formed by extruding an aluminum alloy so as to have a longitudinal rectangular cross section, with a front end being welded to the headpipe 3 and a rear end being welded to an upper part of the pivot plate 6.

The down tube 5 is formed from an angular pipe of aluminum alloy or the like, with a rear side wall of a smaller section being formed into a tapered shape using a swaging process, a rear wall upper section and lower walls of each of the middle parts of the left and right main frames 4 being horizontal when viewed from the side, and connection being reinforced by a tension pipe 50 having an arched shape pointing towards the front when viewed in plan.

A front end of the tension pipe 50 is linked to the down tube 5 by a gusset 51, and an attachment stay of a hanger bracket 39 is provided on a rear end of the tension pipe 50 and a welded section of the main frame 4. A lower part of the down tube 5 is welded to a front end of a lower frame 7 formed from an angular aluminum alloy pipe divided into left and right sections, via a joint member 53.

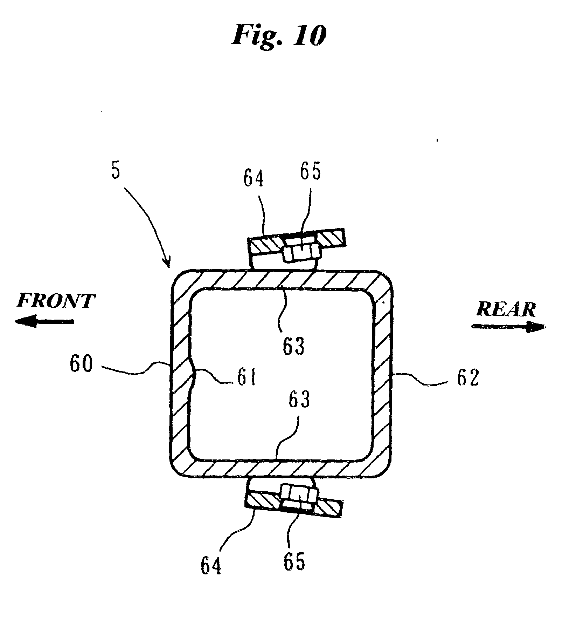

Fig. 10 is a cross section of the down tube 5, and of the four walls, a rib 61 for linking in a length direction is integrally formed on an inner middle surface of the front wall 60. A rear wall 62 has a lower half side forming a tapered section 62b, that will be described later, gradually becoming thinner towards the bottom. However, the rear wall upper section 62a of the upper half side is formed into a straight section. Also, L-shaped radiator attachment sections 64 are welded to the outside of each of the left and right side walls 63, weld nuts 65 are provided on the attachment sections 64, and the left and right radiators 2 are bolt fastened.

As is clear from Fig. 7, the tapered section 62b is only provided on the rear wall 62, and a space 57b is formed behind the tapered section 62b, and between the cylinder head 27 and the front of the cylinder head cover 28. Other sections, namely an upper rear wall 62a, a front wall 60 and left and right side walls 63 are not tapered, and are all straight walls. Specifically, because of the tapered section 62b, the down tube 5 has an asymmetrical shape when viewed from the side.

To make the down tube 5 in this kind of shape, an angular cross section pipe is previously extruded with a specified cross section with an integral rib 61, and by performing a swaging process to compress the pipe only from 4 orthogonal directions, it is possible to form only specific walls to a tapered shape of only a required length. This type of swaging process is well known, and by doing this it is possible to arbitrarily thicken the inner cross-sectional wall at one part, and it is also easy to form the rib 61 of this embodiment.

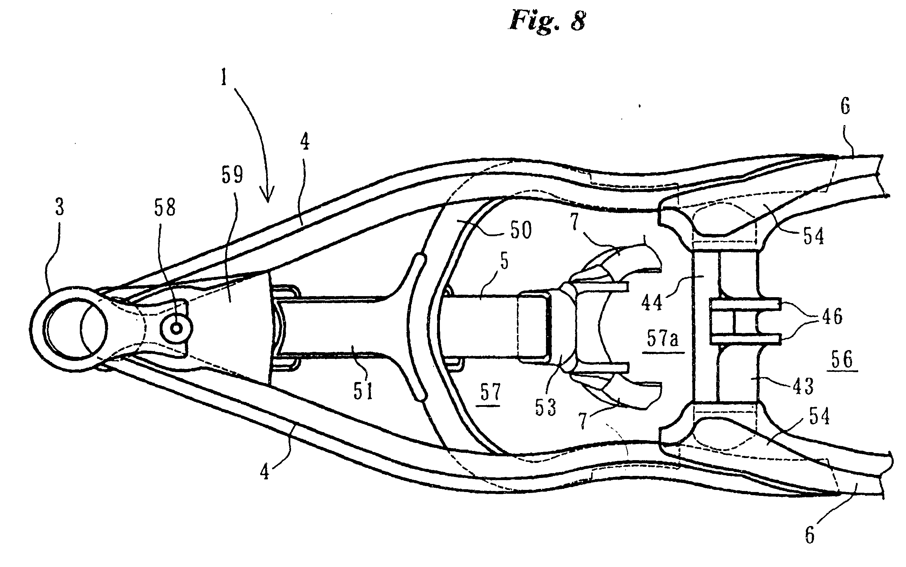

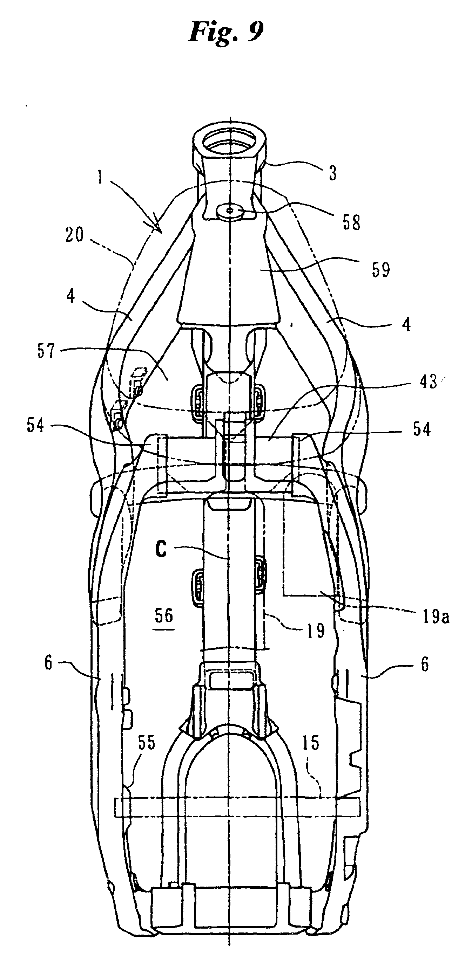

The pivot plates 6 are plate members constructed of aluminum alloy or cast metal, and upper ends form upwardly extending sections 54 projecting further up than the rear end of the main frame 4, with these sections sloping inwardly respectively to the left and right (refer to Fig. 8 and Fig. 9). Indentations are formed in opposite inner side surfaces of the left and right upwardly extending sections 54, and both ends of the rear cross member 43 are fitted into these indentations and welded. Also, pivot receiving sections are provided at lower side positions in the middle of the left and right pivot plates 6, and both ends of a pivot shaft 15 are supported in these receiving sections.

The rear cross member 43 is a hollow member obtained by casting or molding aluminum alloy or the like, and an upper surface 44 of the rear cross member constitutes a support section on which a rear end 45 of the fuel tank is placed and supported. Also, a cushion bracket 46 protruding in a bifurcated shape towards the rear is integrally formed in a central section, and an upper end of the rear cushion 19 is rotatably supported on the cushion bracket 46. This cushion bracket 46 is slightly offset from the center of the vehicle, but is provided at a position where the offset is minimum. Attachment sections for the seat rail 8 are formed on an upper section of the cushion bracket 46.

A space 56 (Fig. 6) formed between the underneath of the rear cross member 43, the left and right pivot plates 6 and a lower pivot shaft 15 forms an extremely large continuous space, and the rear cushion 19, exhaust pipe 23 and connecting tube 36 are all arranged in this space, as shown in Fig. 6. A large continuous fuel tank storage space 57 (Fig. 8) is also formed further forward than the rear cross member 43, higher than the tension pipe 50 and further to the rear than the head pipe 3, and in part of this space a cylinder rear space 57a is formed to the rear side of the cylinder head cover 28 of the engine 2 (Fig. 3).

Reference numeral 58 in Fig. 8 and Fig. 9 is an attachment boss for the bracket 40 integrally formed with the head pipe 3, and 59 is a cross member integrally formed with a rear section of the head pipe 3 and extending rearwards, securing contact sections of the left and right main frames 4. Also, reference numeral 53a in Fig. 7 is an engine support stay provided on the joint member 53, while reference numeral 7a in Fig. 7 is an engine support stay provided on the lower frame 7.

Next, operation of this embodiment will be described. As shown in Fig. 10, the rib 61 is integrally provided on an inner surface of a front wall 60 of the down tube 5, which means that it is possible to increase the rigidity of only the front wall 60, being the most stressed section, and it is possible to make the other walls 62 and 63 thinner than the rib 61. Accordingly, it is possible to realize an overall reduction in weight while ensuring the required rigidity.

Also, as shown in Fig. 2, a lower end of the rear wall 62 of the down tube 5 is made into a tapered section 62b, and so by providing the rib 61 on the front wall 60 and providing the tapered section 62b on the rear wall 62 constituting an opposite wall it is possible arbitrarily balance the rigidity of the down tube 5 and the vehicle frame 1, which is also advantageous to vehicle layout.

Further, since the space 57b is formed between this tapered section 62b and each of the side sections of the cylinder head 27 and the cylinder head cover 28, it is possible to arrange the joint hose 34, being a water hose for the radiator 22, and the exhaust pipe 23 using this space 57b, and as a result it becomes possible to reduce the overall length of the vehicle and to make the vehicle more compact. Besides this, the angular cross section pipe subjected to this type of tapering process or having thickness deviation can be easily formed by, after extruding an angular pipe as in this embodiment, applying a special swaging process to compress the extruded angular pipe from only four orthogonal directions.

Within the rear wall 62, a rear wall upper section 62a is a straight section, which means that with this straight section as a joining wall welding processing can be performed easily in the case of welding the tension plate 51.

The present invention is not limited to the above described embodiment, and various adaptations ore possible. For example, if the front wall 60 is tapered, the front wheel can be brought closer to the down tube 5 side, which means that there is increased freedom with respect to selecting the position of the headpipe 3, and there is increased freedom with respect to the vehicle geometry.

Also, by performing a swaging process on the side wall 63 of the down tube 5 to taper it, it is possible to move the attachment position o the radiator 22 towards the center of the vehicle, and in this way it is made possible to reduce increase in width of the vehicle, and to make the vehicle light in weight.

## Claims

1. A motorcycle frame (1) comprising a main frame (4) running from a headpipe (3), above an engine (2) and towards the rear of the vehicle, and a down frame (5) running from the headpipe (3) and sloping diagonally downwards to the front of the engine (2), the down frame (5) being formed of an angular cross section pipe member, with a strengthening means (61) on an inner surface of the down frame (5); **characterized in that** the strengthening means is a rib (51) integrally formed on an inner surface of the front side wall (60) of the down frame (5), and **in that** the down frame (5) is formed with a rear wall (62) becoming gradually thinner in a downward direction.

2. The motorcycle frame (1) of claim 1, wherein the down frame (5) is formed by performing a swaging process.

3. The motorcycle frame (1) of claim 1 or claim 2, wherein a space (57b) for radiator hose plumbing is formed between the down frame (5) and a front section of the engine (2).

4. The motorcycle frame (1) of any of the preceding claims, wherein the down frame (5) is formed from an aluminum alloy.

5. The motorcycle frame (1) of any of the preceding claims, wherein radiator attachment sections (64) are welded to the outside of the left and right side walls (63) of the down frame (5).

## Patentansprüche

1. Ein Motorradrahmen (1), welcher einen Hauptrahmen (4) aufweist, der von einem Oberrohr (3), über einen Motor (2) und in Richtung des hinteren Teils des Fahrzeugs verläuft, und einen Abwärtsrahmen (5) aufweist, der vom Oberrohr (3) aus verläuft und quer nach unten zum vorderen Teil des Motors (2) abfällt, wobei der Abwärtsrahmen (5) aus einem im Querschnitt eckigen Rohrteil gebildet ist mit einem Verstärkungsmittel (61) auf einer Innenfläche des Abwärtsrahmens (5), **dadurch gekennzeichnet, dass** das Verstärkungsmittel eine Rippe (61) ist, die auf einer Innenfläche der vorderen Seitenwand (60) des Abwärtsrahmens (5) angeformt ist, und dass der Abwärtsrahmen (5) mit einer hinteren Wand (62) gebildet ist, die in Abwärtsrichtung graduell dünner wird.

2. Der Motorradrahmen (1) nach Anspruch 1, wobei der Abwärtsrahmen (5) durch ein Hämmerverfahren geformt wird.

3. Der Motorradrahmen (1) nach Anspruch 1 oder 2, wobei eine Aussparung (57b) für eine Kühlerschlauchleitung zwischen dem Abwärtsrahmen (5) und einem vorderen Abschnitt des Motors (2) gebildet wird.

4. Der Motorradrahmen (1) nach einem der vorhergehenden Ansprüche, wobei der Abwärtsrahmen (5) aus einer Aluminiumlegierung hergestellt ist.

5. Der Motorradrahmen (1) nach einem der vorhergehenden Ansprüche, wobei Kühleranschlussteile (64) an die Außenseite der rechten und linken Seitenwände (63) des Abwärtsrahmens (5) angeschweißt sind.

## Revendications

1. Cadre de motocyclette (1) comprenant un cadre principal (4) s'étendant à partir d'une tubulure (3) au dessus d'un moteur (2) et vers l'arrière du véhicule, et un cadre inférieur (5) s'étendant à partir de la tubulure (3) et incliné en diagonale vers le bas vers l'avant du moteur (2), le cadre inférieur (5) étant formé d'une pièce de tube de section transversale angulaire avec un moyen de renforcement (61) sur une surface interne du cadre inférieur (5), **caractérisé en ce que** le moyen de renforcement est une nervure (51) formée, de façon intégrale, sur une surface interne de la paroi latérale avant (60) du cadre inférieur (5) et **en ce que** le cadre inférieur (5) est formé d'une paroi arrière (62) devenant progressivement plus mince dans une direction vers le bas.

2. Cadre de motocyclette (1) selon la revendication 1, dans lequel le cadre inférieur (5) est formé en appliquant un processus de rétreinte.

3. Cadre de motocyclette (1) selon la revendication 1 ou 2, dans lequel un espace (57b) pour une plomberie de tuyau souple de radiateur est formé entre le cadre inférieur (5) et une section avant du moteur (2).

4. Cadre de motocyclette (1) selon l'une quelconque des revendications précédentes, dans lequel le cadre inférieur (5) est formé à partir d'un alliage d'aluminium.

5. Cadre de motocyclette (1) selon l'une quelconque des revendications précédentes, dans lequel les sections de fixation de radiateur (64) sont soudées sur l'extérieur des parois latérales gauche et droite (63) du cadre inférieur (5).
